(19) Europäisches Patentamt
European Patent Office
Office européen des brevets

(11) Numéro de publication: **0 211 731**
**B1**

(12) **FASCICULE DE BREVET EUROPEEN**

(45) Date de publication du fascicule du brevet: **13.12.89**

(51) Int. Cl.⁴: **C08K 5/51**, C08L 69/00

(21) Numéro de dépôt: **86401560.7**

(22) Date de dépôt: **11.07.86**

(54) **Polycarbonates aromatiques ignifuges par un sel alcalin d'un tetraester de l'acide imido diphosphorique.**

(30) Priorité: **17.07.85 FR 8510959**

(43) Date de publication de la demande: **25.02.87 Bulletin 87/9**

(45) Mention de la délivrance du brevet: **13.12.89 Bulletin 89/50**

(84) Etats contractants désignés: **BE CH DE FR GB IT LI NL**

(56) Documents cités: **US-A- 3 253 063**

(73) Titulaire: **ATOCHEM, 4 & 8, Cours Michelet La Défense 10, F-92800 Puteaux(FR)**

(72) Inventeur: **Poisson, Pierre, Le Mascrier, F-27300 Bernay(FR)**
Inventeur: **Potin, Philippe, 9 rue des Pâquerettes, F-64140 Billère(FR)**

(74) Mandataire: **Rochet, Michel et al, ATOCHEM Département Propriété Industrielle La Défense 10 4 & 8 Cours Michelet, F-92800 Puteaux(FR)**

**EP 0 211 731 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

Les polycarbonates sont déjà par eux-mêmes des matériaux auto-extinguibles. Toutefois, ils sont considérés comme étant encore trop inflammables pour un certain nombre d'applications concernant notamment les industries du bâtiment, de l'électro-ménager ou de l'aéronautique.

Aussi, afin de les rendre encore plus ignifuges, de nombreuses solutions ont été proposées.

C'est ainsi que l'on a déjà fait usage de produits halogénés tels le décabromodiphényléther, introduit sous forme d'additif, ou le tétrabromobisphénol A, sous forme d'agent de polycondensation ; mais l'on obtient ainsi des matériaux susceptibles de dégager, lors de leur mise en oeuvre ou dans des incendies, de l'acide chlorhydrique ou de l'acide bromhydrique qui sont particulièrement corrosifs et toxiques.

On a alors proposé certains dérivés du phosphore qui ne présentent pas ces inconvénients, tels les esters d'acides phényl ou xylènes phosphoniques halogénés sur le noyau ; toutefois, il faut les incorporer à des doses telles que les propriétés mécaniques du polycarbonate ainsi chargé et son aptitude à la transformation en sont sérieusement affectés. De même, le coût en devient prohibitif.

D'autres additifs ont encore été proposés, tels que les sels alcalins d'acide alkyl ou arylsufoniques, mais les compositions obtenues sont généralement translucides ou opaques.

Nous avons trouvé, et ceci fait l'objet de la présente invention, que l'on pouvait obtenir des compositions de résines synthétiques transparentes à base de polycarbonates et, en particulier, de polycarbonate dérivé du bisphénol A, présentant un comportement au feu amélioré en leur incorporant une quantité très faible d'un sel alcalin d'un tétraester de l'acide imido-diphosphorique.

Ce sel répond d'une manière générale à la formule suivante :

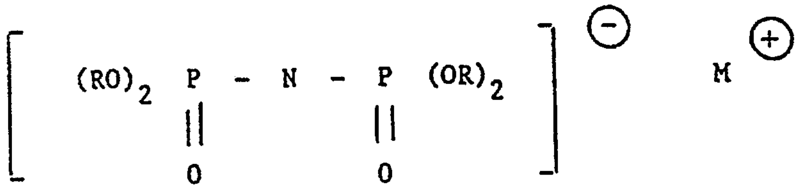

dans laquelle R représente un reste alcoyle en $C_1$ à $C_6$ ou un radical aryle, substitué ou non par des halogènes tels que chlore ou brome, et M désigne un atome de métal alcalin choisi parmi Li, Na, K et de préférence K.

Ce sel doit être incorporé à une concentration comprise entre 0,1 et 10 pour mille, de préférence entre 0,3 et 0,5 pour mille parties en poids de polycarbonate.

Convient tout particulièrement comme additif ignifuge le sel de potassium de l'ester tétraphénylique de l'acide imidodiphosphorique (ou bis diphénoxy imidate de potassium) de formule :

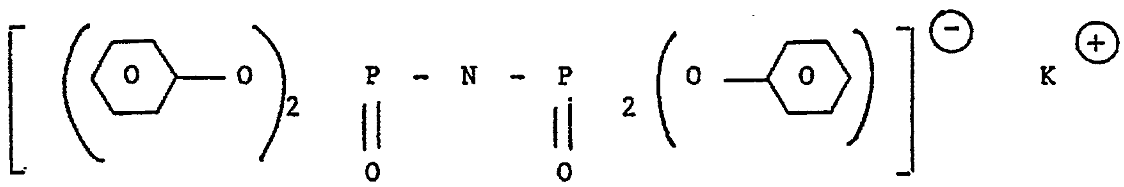

Ce dernier sel est obtenu par addition de potasse alcoolique à une solution alcoolique de l'ester tétraphénylique de l'acide imido diphosphorique (suivant la réaction ci-dessous) et évaporation de l'alcool éthylique.

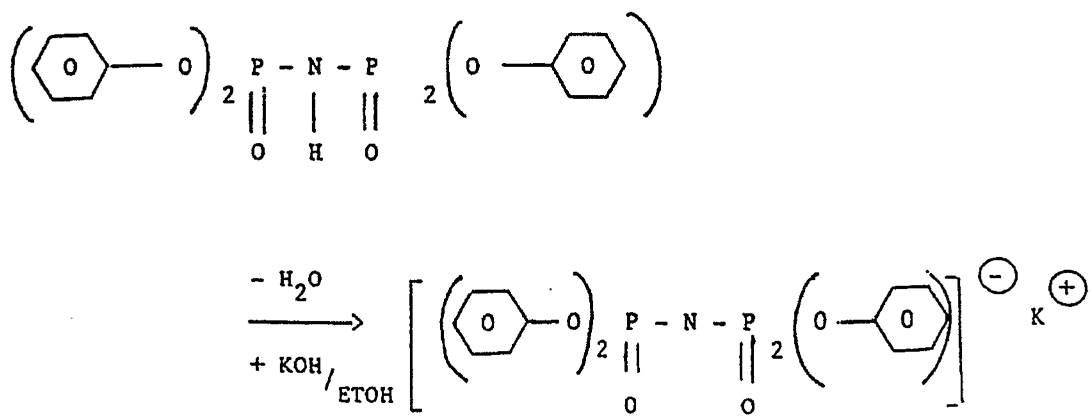


L'ester tétraphénylique de l'acide imido diphosphorique peut, lui-même, être aisément obtenu à partir du tétrachlorure de l'acide imido diphosphorique selon la réaction :

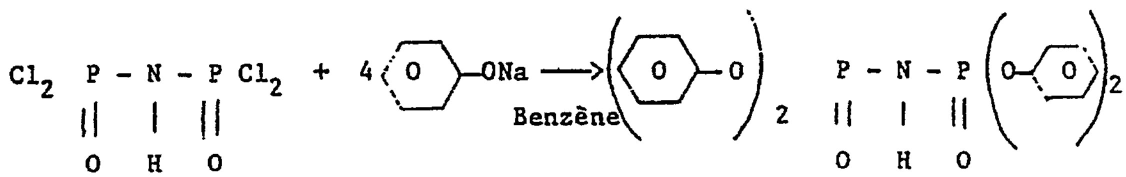


(Von RICHTER, E. FLUCK, H. RIFFEL, et H. HESS – Z. anorg. allg. Chem. 496, 109–116 – 1983).

Les polycarbonates qui peuvent être ignifugés par l'addition de tels sels suivant l'invention peuvent être choisis parmi les divers polycarbonates ou copolycarbonates aromatiques dérivant d'un ou plusieurs diphénols tels que résorcinol, hydroquinone, dihydroxydiphényle, bis (hydroxyphényl) alcanes, bis (hydroxyphényl) cycloalcanes, bis (hydroxyphényl) éthers, bis (hydroxyphényl) sulfures, bis (hydroxyphényl) cétones, bis (hydroxyphényl) sulfones, bis (hydroxyphényl) sulfoxydes, α , α' - bis (hydroxyphényl) di isopropylbenzènes, et les dérivés alcoylés sur le noyau de tels diphénols.

En particulier, les polycarbonates ou copolycarbonates peuvent être choisis parmi ceux dérivant d'un ou plusieurs bisphénols tels que bis (hydroxy-4 phényl)-2,2 propane, dihydroxy-4,4' diphényl, bis (hydroxy-4 phényl)-2,4 méthyl-2 butane, bis (hydroxy-4 phényl)-1,1 cyclohexane, α,α'-bis (hydroxy-4 phényl) p-di isopropylbenzène, bis (méthyl-3 hydroxy-4 phényl) -2,2 propane, bis (diméthyl-3,5 hydroxy-4 phényl) méthane, bis (diméthyl-3,5 hydroxy-4 phényl)-2,2 propane, bis (diméthyl-3,5 hydroxy-4 phényl) sulfone, bis (diméthyl-3,5, hydroxy-4 phenyl)-2,4 méhtyl-2 butane, bis (diméthyl-3,5 hydroxy-4 phényl)-1,1 cyclohexane, et α,α' - bis (diméthyl-3,5 hydroxy-4phényl) p-di isopropylbenzène.

Les polycarbonates et copolycarbonates préférés sont ceux qui dérivent d'un ou plusieurs bisphénols choisis dans le groupe formé par le bis (hydroxy-4 phényl)-2,2 propane, encore appelé bisphénol A, le bis (diméthyl-3,5 hydroxy-4 phényl)-2,2 propane, et le bis (hydroxy-4 phényl)-1,1 cyclohexane.

Ces polycarbonates aromatiques, qui peuvent être préparés par les procédés bien connus de transestérification en milieu fondu entre le ou les diphénols choisis et le carbonate de diphényle ou de réaction interfaciale entre le ou les diphénols désirés et le phosgène, sont généralement thermoplastiques et possèdent des masses moléculaires viscosimétriques qui, calculées à partir de leur viscosité en solution, sont comprises entre 15 000 et 60 000 et se situent de préférence entre 20 000 et 40 000.

En plus de l'additif ignifugeant, les compositions de polycarbonate peuvent renfermer également d'autres additifs tels que des pigments, des colorants, des stabilisants vis-à-vis des rayons ultraviolets, des agents de démoulage, des stabilisants à la dégradation thermique et des charges. Lesdites compositions peuvent renfermer également des fibres de verre, notamment en proportions allant de 10 à 35 % en poids du polycarbonate, dans le but d'améliorer la rigidité de la résine thermoplastique de polycarbonate. On peut leur adjoindre également des agents qui diminuent le gouttage tels que des polysiloxanes ou des polytétrafluoroéthylènes, et en particulier des polytétrafluoroéthylènes se présentant sous la forme d'une poudre blanche obtenue par polymérisation de tétrafluoroéthylène en émulsion aqueuse et possédant des masses moléculaires en poids comprises entre $10^5$ et $10^6$.

L'incorporation du sel ignifugeant de l'invention se fait par malaxage dans le polycarbonate à l'état fondu - tout appareil de malaxage assurant une bonne dispersion (tel qu'extrudeuse monovis ou double vis, malaxeur Buss...) peut donc convenir.

La méthode la plus pratique consiste à mélanger à sec, par exemple, au tonneau, les granulés de polycarbonate et le sel ignifugeant et à alimenter avec le mélange ainsi obtenu la trémie d'une extrudeuse - les joncs qui sortent fondus de l'extrudeuse, munie d'une filière multitrous, sont refroidis par passage dans un bac à eau et coupés en granulés.

Les éprouvettes destinées à être utilisées pour les essais normalisés de combustion seront obtenues par moulage par injection des granulés obtenus ci-dessus, après séchage convenable, les températures d'injection étant de l'ordre de 280 à 320°C.

Parmi les divers essais existant pour évaluer le comportement au feu des polymères, deux essais de combustion, considérés comme particulièrement significatifs, ont été retenus pour apprécier le comportement des compositions de polycarbonate suivant l'invention, à savoir d'une part l'essai de détermination de l'Indice d'Oxygène Limite (I.O.L.) défini dans la norme ASTM D 2863, et, d'autre part, l'essai de combustion UL 94 décrit dans le bulletin 94 des UNDERWRITERS' LABORATORIES.

Les exemples qui sont résumés dans le tableau ci-après ont été effectués sur un polycarbonate du commerce, obtenu par réaction interfaciale entre le phosgène et le bisphénol A et présentant une masse moléculaire de 25 000.

A ce polycarbonate ont été incorporées différentes doses de bis diphénoxy imidate de potassium (BDIP) obtenu comme indiqué ci-dessus ; les granulés obtenus ont servi à mouler des éprouvettes parallélépipédiques rectangles de 3,2 mm d'épaisseur sur lesquelles ont été effectués les essais d'inflammabilité normalisés.

La transparence qui est absolument remarquable, un des très gros avantages de l'invention, peut être vérifiée au moyen d'un HAZEMETER de GARDNER, type XL 211, selon la norme ASTM D 1003-61.

| Exemple | Composition Parties pour mille | | Indice d'oxygène (en %) | Temps moyen de combustion (en sec) | Gouttes enflammant le coton | Classement UL 94 3,2 mm | Transparence de l'éprouvette |
|---|---|---|---|---|---|---|---|
| | Polycarbonate | BDIP | | | | | |
| Témoin | 1000 | 0 | 27,5 | 14,4 | nombreuses | V 2 | oui |
| 1 | 1000 | 0,1 | 28 | 3,4 | 1 par éprouv. | V 2 | oui |
| 2 | 1000 | 0,3 | 29,5 | 2,4 | 1 par éprouv. | V 2 | oui |
| 3 | 1000 | 0,5 | 31,5 | 2,4 | 1 par éprouv. | V 2 | oui |

## Revendications

1 - Compositions de résines synthétiques ayant une faible combustibilité, constituées d'un polycarbonate, d'un additif ignifugeant, et, éventuellement, d'autres additifs et charges, caractérisés en ce que l'additif ignifugeant répond à la formule générale :

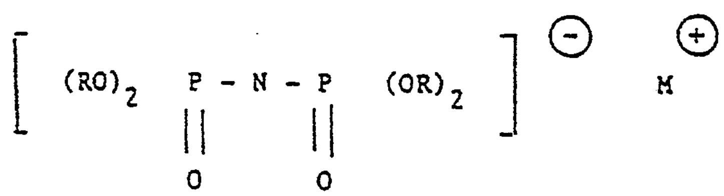

dans laquelle R représente un reste alcoyle en C1 à C6 ou un radical aryle substitué ou non par des halogènes tels que chlore ou brome, et M désigne un atome de métal alcalin choisi parmi Li, Na, K et de préférence K, ledit additif ignifugeant étant utilisé à raison de 0,1 à 10 pour mille parties, de préférence entre 0,3 et 0,5 pour mille parties en poids de polycarbonate.

2 - Compositions selon la revendication 1 caractérisées en ce que l'additif ignifugeant est le bis diphénoxy imidate de potassium.

3 - Compositions selon la revendication 1 ou 2 caractérisées en ce que le polycarbonate est un polycarbonate ou copolycarbonate dérivant d'un ou plusieurs bisphénols choisis parmi le bis(hydroxy-4 phényl)-2,2 propane, le bis (diméthyl-3,5 hydroxy-4 phényl)-2,2 propane, et le bis (hydroxy-4 phényl)1,1 cyclohexane.

## Claims

1. Synthetic resin compositions which have low combustibility, consisting of a polycarbonate, a fireproofing additive and, optionally, other additives and fillers, characterized in that the fireproofing additive responds to the general formula:

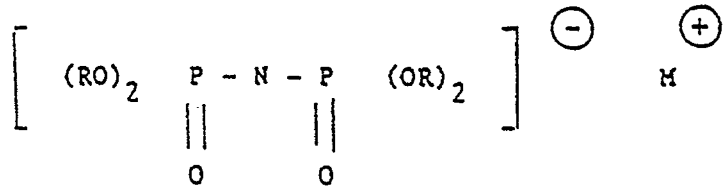

in which R denotes a $C_1$–$C_6$ alkyl residue or an aryl radical substituted or unsubstituted by halogens such as chlorine or bromine, and M denotes an alkali metal atom chosen from Li, Na and K, and preferably K, the said fireproofing additive being employed in a proportion of 0.1 to 10 per thousand parts, preferably of between 0.3 and 0.5 per thousand parts by weight of polycarbonate.

2. Compositions according to Claim 1, characterized in that the fireproofing additive is potassium bis-diphenoxyimidate.

3. Compositions according to Claim 1 or 2, characterized in that the polycarbonate is a polycarbonate or copolycarbonate derived from one or more bisphenols chosen from 2,2-bis(4-hydroxyphenyl)propane, 2,2-bi(3,5-dimethyl-4-hydroxyphenyl)propane and 1,1-bis(4-hydroxyphenyl)cyclohexane.

**Patentansprüche**

1. Synthetische Kunststoffzusammensetzungen mit schlechter Brennbarkeit, bestehend aus einem Polycarbonat, einem flammenhemmenden Additiv und gegebenenfalls anderen Additiven und Füllstoffen, dadurch gekennzeichnet, daß das flammenhemmende Additiv der allgemeinen Formel entspricht

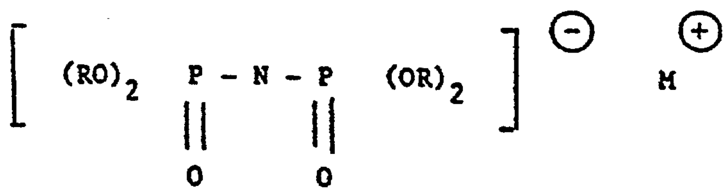

worin R einen $C_1$- bis $C_6$-Alkoxylrest darstellt, durch Halogene wie Chor oder Brom substituiert oder nicht, und M ein aus Li, Na, K und vorzugsweise K ausgewähltes Alkalimetallatom bezeichnet, wobei das feuerhemmende Additiv in einem Verhältnis von 0,1 bis 10 auf 1000 Teile, vorzugsweise zwischen 0,3 und 0,5 auf 1000 Gewichtsteile Polycarbonat verwandt wird.

2. Zusammensetzungen nach Anspruch 1, dadurch gekennzeichnet, daß das feuerhemmende Additiv das Bisdiphenoxyimidat von Kalium ist.

3. Zusammensetzungen nach Anspruch 1 oder 2, dadurch gekennzeichnet, daß das Polycarbonat ein Polycarbonat oder Copolycarbonat ist, daß sich von einem oder mehreren Bisphenolen, ausgewählt auf Bis(hydroxy-4-phenyl)-2,2-propan, Bis(3,5-dimethyl-4-hydroxyphenyl)-2,2-propan und Bis(4-hydroxyphenyl)-1,1-cyclohexan, ableitet.